**Europäisches Patentamt**

**European Patent Office**

**Office européen des brevets**

(11) Veröffentlichungsnummer: **0 437 762 A1**

## (12) EUROPÄISCHE PATENTANMELDUNG

(21) Anmeldenummer: **90124449.1**

(22) Anmeldetag: **17.12.90**

(51) Int. Cl.5: **H02B 13/01**

(30) Priorität: **17.01.90 DE 4001192**

(43) Veröffentlichungstag der Anmeldung:
**24.07.91 Patentblatt 91/30**

(84) Benannte Vertragsstaaten:
**AT CH DE ES FR GB LI**

(71) Anmelder: **CONCORDIA SPRECHER ENERGIE GMBH**
**Industriestrasse 9**
**W-7024 Filderstadt 1(DE)**

(72) Erfinder: **Perle, Josef**
**Filsstrasse 7**
**W-7440 Nürtingen 10(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) **Schaltstation im Baukastensystem.**

(57) Es wird eine insbesondere mehrfeldrige Schaltstation unter Verwendung von mit SF6-Gas gefüllten Lasttrennschalters beschrieben, die in Form von jeweils fertigen Einzelbausteinen aufgebaut ist. Die Einzelbausteine werden über ihre Außengehäuse mechanisch miteinander verbunden, und die elektrischen Verbindungen werden durch Doppelsteckelemente realisiert, die in fluchtende Hohlkontaktaufnahmen aneinandergrenzender Bausteine eingreifen.

Fig. 4

EP 0 437 762 A1

## SCHALTSTATION IM BAUKASTENSYSTEM

Die Erfindung betrifft eine Schaltstation, insbesondere in mehrfeldriger Ausführung für Mittelspannungsanlagen, mit zumindest einem mit SF6-Gas gefüllten Lasttrennschalter und zugehörigen Einheiten wie beispielsweise Meßwandler, Sicherungsanbau, Hochführungseinheit und/oder Leistungsschalter.

Bekannte Schaltstationen dieser Art, die dreifeldrig oder vierfeldrig ausgeführt sind, sind üblicherweise komplett montiert und verschweißt und werden beim Hersteller mit SF6-Gas gefüllt.

Bekannt ist es auch bereits, aneinandersetzbare einfeldrige Einheiten zu fertigen, diese entsprechend den geforderten Schaltaufgaben zusammenzufügen und dann eine Befüllung mit SF6-Gas vorzunehmen. Diese Befüllung mit SF6-Gas muß herstellerseitig vorgenommen werden, so daß die erzielbare Variabilität aufgrund der einfeldrigen Ausgestaltung nur herstellerseitig gewisse Vorteile erbringt.

Aufgabe der Erfindung ist es, eine Schaltstation der eingangs angegebenen Art so auszugestalten, daß sie entsprechend den jeweiligen Erfordernissen baukastenartig zusammengestellt werden kann, wobei die Bausteine durch den Anwender kombinierbar sein sollen und nach erfolgter Kombination der problemfrei mechanisch und elektrisch miteinander zu verbindenden Bausteine eine sofort funktionstüchtige Station vorliegt.

Gelöst wird diese Aufgabe nach der Erfindung im wesentlichen dadurch, daß jeder Lasttrennschalter als hermetisch abgedichtete, mit SF6-Gas gefüllte, einfeldrige Einheit ausgebildet und in einem einen Stationsbaustein bildenden Außengehäuse angeordnet ist,
daß die bedarfsabhängig zugehörigen Einheiten in Form von Meßwandler, Leistungsschalter und/oder Hochführungseinheit ebenfalls in entsprechende Stationsbausteine bildenden Außengehäusen angeordnet sind,
daß die elektrischen Außenanschlüsse der einzelnen Einheiten durch wandungsbündig an vorbestimmten Positionen der Stationsbausteine vorgesehene Hohlkontaktaufnahmen gebildet sind,
und daß zur elektrischen Verbindung aneinandergrenzender Hohlkontaktaufnahmen jeweils ein Doppelkontaktstecker vorgesehen und unter gegenseitiger Verspannung der Außengehäuse formschlüssig klemmend in den Hohlkontaktaufnahmen fixiert ist.

Die einzelnen Bausteine können mit vergleichsweise kleinen Außenabmessungen gefertigt werden und ermöglichen bei geringem Gewicht auch einen einfachen Transport, da jeder Baustein für sich verpackt und sowohl beim Transport als auch bei der Montage einzeln gehandhabt werden kann.

Durch die gemäß der Erfindung vorgesehenen elektrischen Steckverbindungen zwischen den einzelnen Bausteinen wird nicht nur die Montage wesentlich erleichtert, sondern vor allem auch ein äußerst kompakter und raumsparender Gesamtaufbau von Stationen ermöglicht und auch ein gegebenenfalls erforderlicher Umbau unter Demontage oder Teildemontage der einzelnen Bausteine sehr vereinfacht.

Die einzelnen Bausteine können über entsprechende Steckverbindungen auch aufeinandergestellt werden, wobei die Bausteine um 180° gedreht anordenbar sind, so daß in allen Fällen die geforderte hohe Kompaktheit der jeweiligen Station sichergestellt ist.

Von besonderem Vorteil ist es, wenn das Lasttrennschaltergehäuse aus Kunststoff, insbesondere aus Gießharz gefertigt wird, da dadurch aufwendige Abdichtungen und Abschirmungen entfallen und außerdem Korrosionsbeständigkeit gegeben ist. Durch entsprechende Ausgestaltung eines solchen Gehäuses ist es ferner möglich, im Zusammenhang mit der SF6-Befüllung auf die Verwendung von Panzergehäusen zu verzichten, da das Gehäuse so gestaltet werden kann, daß es den bei der Evakuierung und anschließenden SF6-Befüllung auftretenden Differenzdrücken standhält.

Besonders vorteilhafte Ausgestaltungen der Erfindung sind in den Unteransprüchen angegeben.

Die Erfindung wird nachfolgend anhand von Ausführungsbeispielen unter Bezugnahme auf die Zeichnung näher erläutert; in der Zeichnung zeigt:

Fig. 1 eine schematische Darstellung eines Lasttrennschalter-Bausteins in Vorder- und Seitenansicht,

Fig. 2 schematische Seitenansichten von weiteren mit dem Lasttrennschalterbaustein kombinierbaren Bausteinen,

Fig. 3 eine schematische Vorder- und Seitenansicht eines Sicherungsanbaus,

Fig. 4 eine schematische Seitenansicht einer aus den Bausteinen nach den Fig. 1 bis 3 aufgebauten Station, und

Fig. 5 eine schematische Seitenansicht eines weiteren Beispiels einer erfindungsgemäß aufgebauten Station.

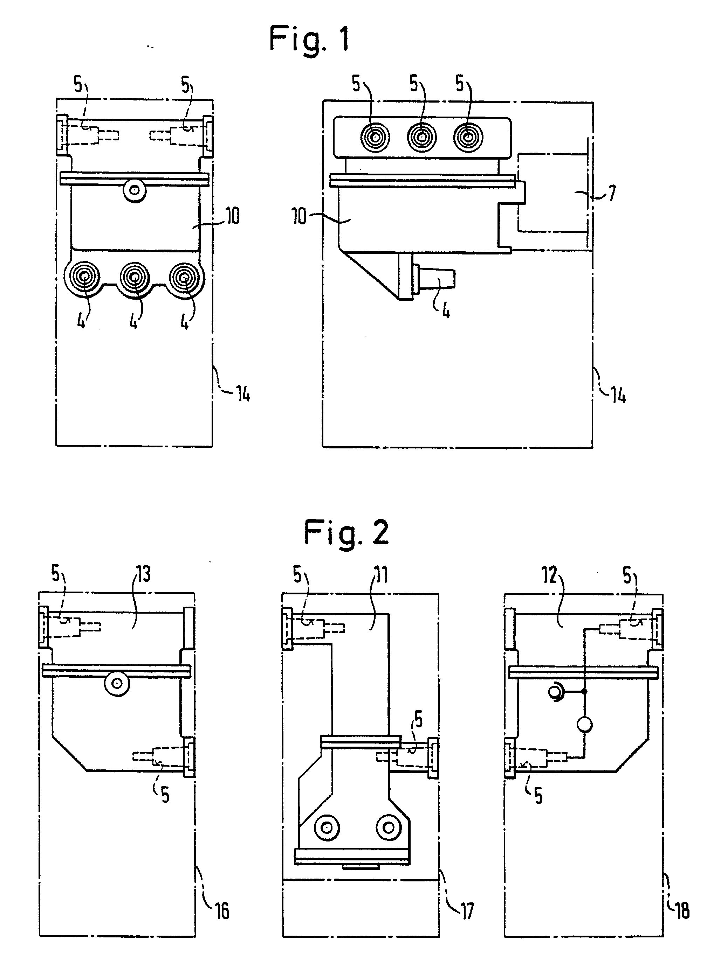

Fig. 1 zeigt einen Lasttrennschalter 10 der nach dem bekannten Drehschalterprinzip mit drei Stellungen aufgebaut ist, wobei die Hauptkontakte in der unteren Gehäusehälfte des vorzugsweise aus Gießharz bestehenden Gehäuses eingegossen sind und die Sammelschienenrohre zusammen mit den zugehörigen Sammelschienenkontakten in die obere Gehäusehälfte eingegossen sind. Beide Gehäusehälften sind mittels mehrerer Schrauben zusammengeschraubt und über einen O-Ring abgedichtet.

An den einander gegenüberliegenden Enden der Sammelschienen sind im Gehäuse Hohlkontaktaufnahmen 5 vorgesehen, die bündig mit den entsprechenden Wandungen des den Lasttrennschalter 10 aufnehmenden Außengehäuses 14 münden.

Der Antrieb des Lasttrennschalters erfolgt über einen schematisch angedeuteten Schalterantrieb 7, der ebenfalls innerhalb des Gehäuses 14 angeordnet ist.

Der Lasttrennschalter 10 ist im oberen Bereich des Außengehäuses 14 angeordnet, so daß im unteren Bereich Raum zur Aufnahme von Kabelanschlußsteckern und/oder eines Sicherungsanbaus zur Verfügung steht. Die Anschlüsse erfolgen dabei über Außenkonen 4 in bekannter Ausführungsform.

In Fig. 2 sind in schematisierter Weise weitere Bausteine einer Schaltstation dargestellt. Mit dem Bezugszeichen 13 ist eine in einem Außengehäuse 16 angeordnete Hochführungseinheit 13, mit dem Bezugszeichen 11 ein in einem Außengehäuse 17 angeordneter Leistungsschalter 11 und mit dem Bezugszeichen 12 ein in einem Außengehäuse 18 angeordneter Meßwandler bezeichnet. Auch bei diesen Einheiten sind sämtliche Anschlüsse über Hohlkontaktaufnahmen 5, die bündig mit dem jeweiligen Außengehäuse liegen, realisierbar. Die Positionierung dieser Hohlkontaktaufnahmen 5 ist in den einzelnen Bausteinen so gewählt, daß bei Aneinanderreihung dieser Bausteine die jeweils zusammengehörigen Hohlkontaktaufnahmen einander fluchtend gegenüberliegen. Zweckmäßigerweise können die Außengehäuse selbst noch mit Zentrierorganen versehen sein, die eine exakte gegenseitige Ausrichtung gewährleisten, wenn die Bausteine beispielsweise über geeignet angebrachte Flansche miteinander verspannt werden.

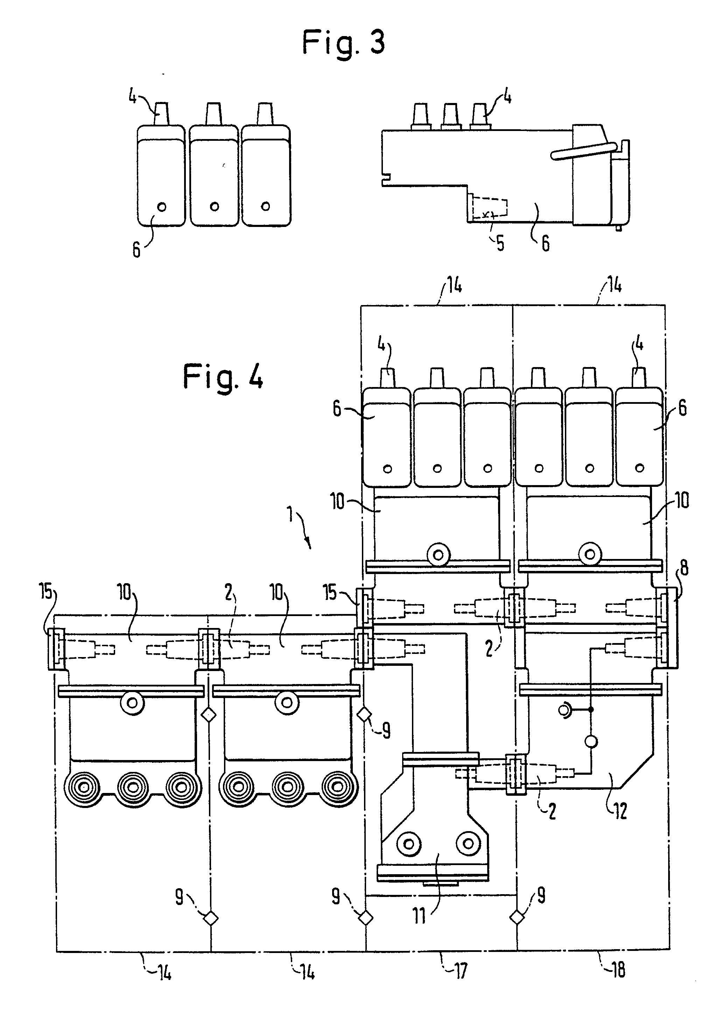

Fig. 3 zeigt einen Sicherungsanbau 6, der im unteren Bereich des Außengehäuses 14 des Lasttrennschalters 10 untergebracht werden kann, wobei die elektrische Verbindung über bekannte Innen- und Außenkonen 4, 5 erfolgt.

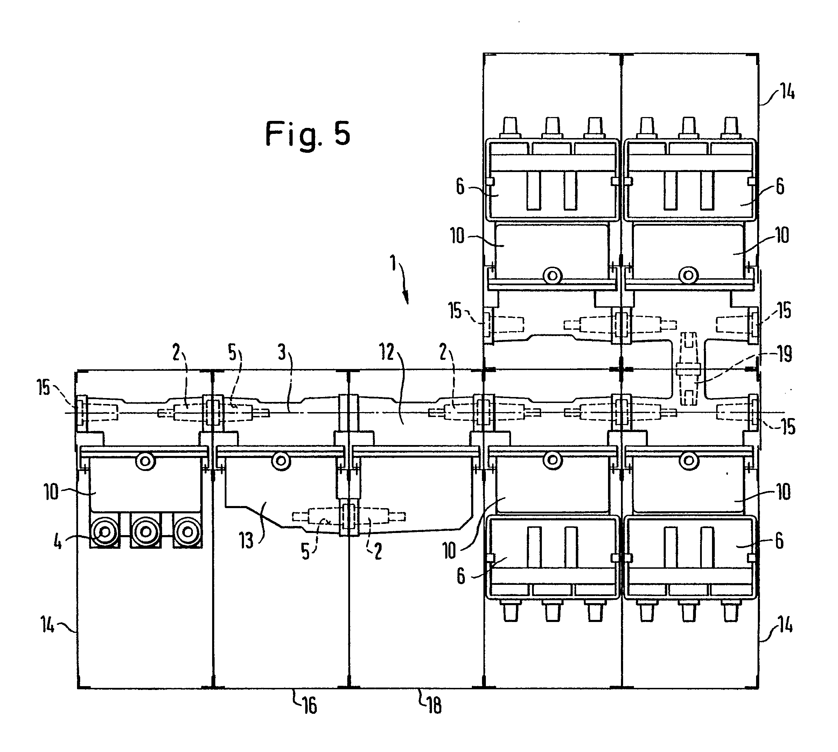

Fig. 4 zeigt ein erstes Beispiel einer aus Bausteinen gemäß der Erfindung aufgebauten Station 1.

Dabei sind zwei Lasttrennschalter 10 nebeneinander angeordnet und bilden zusammen eine Sammelschienenanordnung, die über einen Leistungsschalter 11 und einen Meßwandler 12 mit zwei weiteren Lasttrennschaltern 10 in Verbindung steht.

Dabei sind die durch die Gehäuse 14, 17 und 18 begrenzten Bausteine nebeneinander angeordnet, während sich das zweite Lasttrennschalterpaar um 180° gedreht auf den Leistungsschalter-und Meßwandlerbausteinen befindet.

Die elektrischen Verbindungen zwischen den einzelnen Bausteinen sind über Doppelkontaktstecker 2 realisiert, die in die Hohlkontaktaufnahmen der einzelnen Bausteine eingreifen.

Für einen Anschluß nicht benutzte Hohlkontaktaufnahmen sind durch aus Isoliermaterial bestehende Abdeckstopfen 15 verschlossen.

Die Außengehäuse sind vorzugsweise über Flansche miteinander verbunden, wobei zur exakten gegenseitigen Positionierung der Außengehäuse zweckmäßigerweise zwischen diesen Gehäusen Zentrierorgane 9 vorgesehen sind.

Während das bodenseitig angeordnete Lasttrennschalterpaar 10 zum Anschluß an Kabeln für abgehende Leitungen bestimmt ist, ist das in der zweiten Ebene angeordnete Lasttrennschalterpaar 10 mit Sicherungsanbauten 6 versehen, deren Ausgänge zu Transformatoren führen.

Die elektrische Verbindung zwischen übereinander angeordneten Bausteinen erfolgt vorzugsweise über U-förmige Doppelkontaktstecker 8, die im eigentlichen Kontaktbereich analog den gerade ausgeführten Doppelkontaktsteckern 2 ausgebildet sind.

Die Passung zwischen den Doppelkontaktsteckern und den Hohlkontaktaufnahmen ist jeweils so ausgeführt, daß sich sogenannte Edelfugen ergeben und somit im Verbindungsbereich keine elektrischen Probleme entstehen.

Fig. 5 zeigt eine weitere Ausführungsvariante einer Station 1 aus erfindungsgemäß ausgebildeten Bausteinen. Dabei sind in der unteren Ebene kombiniert ein Lasttrennschalter 10, eine Hochführungseinheit 13, ein Meßwandler 12 und zwei weitere Lasttrennschalter 10, die jeweils mit Sicherungsanbauten 6 versehen sind.

Um 180° gedreht sind über den beiden unteren Lasttrennschalter-Bausteinen 10 zwei obere Lasttrennschalter-Bausteine 10 angeordnet, die ebenfalls mit Sicherungsanbauten 6 ausgerüstet sind.

Die nicht für elektrische Anschlüsse benötigten Hohlkontaktaufnahmen sind dabei wiederum mittels Abdeckstopfen 15 verschlossen. Die elektrischen Verbindungen zwischen den einzelnen Bausteinen sind in der bereits erläuterten Weise über Doppelkontaktstecker 2 realisiert, die in entsprechende Hohlkontaktaufnahmen 5 der miteinander kombinierten Bausteine eingreifen.

Übereinander angeordnete Bausteine werden über analog ausgeführte Steckverbindungen 19 elektrisch miteinander verbunden, wobei in diesem Falle die Doppelkontaktstecker in ihren Endbereichen so ausgeführt sein können, daß sie unmittelbar mit Sammelschienenkontakten zusammenwirken, die auf den entsprechenen Sammelschienenrohren befestigt sind.

Die gezeigten Beispiele dokumentieren, daß benutzerseitig mit wenigen Bausteinen praktisch alle in der Praxis gestellten Forderungen beim Aufbau einer Station erfüllt werden können. Problemfrei sind auch Umbauten und Erweiterungen möglich, da die einzelnen Bausteine auf äußerst einfache Weise mechanisch und elektrisch miteinander kuppelbar sind. Die Steckverbindungen der Sammelschienen können dabei ohne Abschirmung realisiert werden, da sie sich gemäß der bevorzugten Ausgestaltung der Erfindung jeweils in einem Gießharzgehäuse befinden.

Bezugszeichenliste

| 1 | Schaltstation |
| 2 | Doppelkontaktstecker |
| 3 | Sammelschiene |
| 4 | Außenkonusanschluß |
| 5 | Hohlkontaktaufnahme |
| 6 | Sicherungsanbau |
| 7 | Schalterantrieb |
| 8 | U-förmiger Doppelkontaktstecker |
| 9 | Zentrierorgan |
| 10 | Lasttrennschalter |
| 11 | Leistungsschalter |
| 12 | Meßwandler |
| 13 | Hochführungseinheit |
| 14 | Außengehäuse |
| 15 | Abdeckstopfen |
| 16 | Außengehäuse |
| 17 | Außengehäuse |
| 18 | Außengehäuse |
| 19 | Steckverbindung |

**Patentansprüche**

1. Schaltstation, insbesondere in mehrfeldriger Ausführung für Mittelspannungsanlagen, mit zumindest einem mit SF6-Gas gefüllten Lasttrennschalter (10) und zugehörigen Einheiten wie beispielsweise Meßwandler (12), Sicherungsanbau (6), Hochführungseinheit (13) und/oder Leistungsschalter (11),
dadurch **gekennzeichnet,**
daß jeder Lasttrennschalter (10) als hermetisch abgedichtete, mit SF6-Gas gefüllte, einfeldrige Einheit ausgebildet und in einem einen Stationsbaustein bildenden Außengehäuse (14) angeordnet ist,
daß die bedarfsabhängig zugehörigen Einheiten in Form von Meßwandler (12), Leistungsschalter (11) und/oder Hochführungseinheit (13) ebenfalls in entsprechende Stationsbausteine bildenden Außengehäusen (16, 17, 18) angeordnet sind,
daß die elektrischen Außenanschlüsse der einzelnen Einheiten durch wandungsbündig an vorbestimmten Positionen der Stationsbausteine vorgesehene Hohlkontaktaufnahmen (5) gebildet sind,
und daß zur elektrischen Verbindung aneinandergrenzender Hohlkontaktaufnahmen (5) jeweils ein Doppelkontaktstecker (2) vorgesehen und unter gegenseitiger Verspannung der Außengehäuse (11, 16, 17, 18) formschlüssig klemmend in den Hohlkontaktaufnahmen (5) fixiert ist.

2. Schaltstation nach Anspruch 1,
dadurch **gekennzeichnet,**
daß die Hohlkontaktaufnahmen aus Innenkonen (5) bestehen und daß als Doppelstecker Doppelkonusstecker (2) vorgesehen sind.

3. Schaltstation nach Anspruch 1,
dadurch **gekennzeichnet,**
daß die Hohlkontaktaufnahmen rohrförmig und die Doppelkontaktstecker stabförmig ausgebildet sind, und daß die Doppelkontaktstecker mittig mit einem elastischen, aus elektrisch isolierendem Material bestehenden Formteil versehen sind, das in entsprechende Ausnehmungen der Hohlkontaktaufnahmen formschlüssig paßt.

4. Schaltstation nach einem der vorhergehenden Ansprüche,
dadurch **gekennzeichnet,**
daß in die Hohlkontaktaufnahmen jeweils ein Multikontaktkäfig zur Aufnahme der freien Enden der Doppekontaktstecker (2) integriert ist.

5. Schaltstation nach einem der vorhergehenden Ansprüche,
dadurch **gekennzeichnet,**
daß der konusförmige Bereich der Hohlkontaktaufnahmen (5) mit einer elastischen Schicht aus isolierendem Material versehen ist.

6. Schaltstation nach einem der vorhergehenden Ansprüche,
dadurch **gekennzeichnet,**
daß die Außengehäuse (10, 11, 12, 13) mit Zentrierorganen (9) zur positionsgenauen gegenseitigen Fixierung versehen sind.

7. Schaltstation nach einem der vorhergehenden Ansprüche,
dadurch **gekennzeichnet,**
daß der Lasttrennschalter (10) in einem insbesondere aus Gießharz bestehenden, hermetisch abgeschlossenen Gehäuse angeordnet ist, wobei alle Hohlkontaktaufnahmen (5) in einer Ebene in der oberen Gehäusehälfte gelegen sind und an einer der gegenüberliegenden Wandungen des zugehörigen Außengehäuses (14) bündig münden.

8. Schaltstation nach Anspruch 7,
dadurch **gekennzeichnet**,
daß im Außengehäuse (14) des Lasttrennschalters (10) unterhalb des Lasttrennschalters ein Aufnahmeraum für einen Sicherungsanbau (6) vorgesehen ist.

9. Schaltstation nach einem der vorhergehenden Ansprüche,
dadurch **gekennzeichnet**,
daß die Außengehäuse (14, 16, 17, 18) zumindest gleiche Höhenabmessungen besitzen.

10. Schaltstation nach einem der vorhergehenden Ansprüche,
dadurch **gekennzeichnet**,
daß zur elektrischen Verbindung übereinander angeordneter Lasttrennschalter (10) U-förmige Doppelkontaktstecker (8) und/oder vertikal angeordnete Steckverbinder (19) vorgesehen sind.

11. Schaltstation nach einem der vorhergehenden Ansprüche,
dadurch **gekennzeichnet**,
daß freie Hohlkontaktaufnahmen (5) jeweils mittels eines Abdeckstopfens (15) aus Isoliermaterial verschließbar sind.

# Fig. 1

# Fig. 2

## Fig. 3

## Fig. 4

Fig. 5

EP 0 437 762 A1

# EUROPÄISCHER RECHERCHENBERICHT

EP 90124449.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X;Y | DE - A - 1 813 388 (INSTITUT) * Seite 4, Zeile 16 - Seite 6, Zeile 15; Fig. * | 1,6,7, 9;10 | H 02 B 13/01 |
| A | DE - U1 - 7 700 438 (LICENTIA) * Gesamt * | 1,6,7, 9 | |
| A | DE - A1 - 3 146 732 (SPRECHER) * Zusammenfassung; Anspruch 5 * | 6 | |
| Y | DE - A - 1 440 883 (CALOR-EMAG) * Anspruch 1; Fig. 1,2 * | 10 | |
| X | FR - A1 - 2 351 522 (COQ-FRANCE) * Seite 1, Zeile 30 - Seite 2, Zeile 30; Seite 3, Zeile 3 - Seite 4, Zeile 4; Fig. 1-5 * | 1,3 | |
| A | US - A - 3 864 534 (GOODWIN JR. et al.) * Zusammenfassung; Fig. 1,4 * | 1 | RECHERCHIERTE SACHGEBIETE (Int Cl⁵)  H 02 B 13/00 |
| A | DE - A1 - 2 809 851 (COQ) * Seite 6, Zeile 3-34; Fig. 1,2 * | 1 | |

Der vorliegende Recherchenbericht wurde für alle Patentansprüche erstellt.

| Recherchenort WIEN | Abschlußdatum der Recherche 21-03-1991 | Prüfer KUTZELNIGG |
|---|---|---|